# EUROPEAN PATENT SPECIFICATION

(11) **EP 3 163 319 B1**
(45) Date of publication and mention of the grant of the patent: **21.06.2023**
(21) Application number: 16194612.4
(22) Date of filing: 19.10.2016
(51) Int. Cl.: G01S 15/96, G01S 7/539, G01S 7/62

(54) **UNDERWATER DETECTION DEVICE**
UNTERWASSERDETETKIONSVORRICHTUNG
APPAREIL DE DÉTECTION SOUS-MARINE

(30) Priority: 29.10.2015 JP 2015212973
(43) Date of publication of application: 03.05.2017
(73) Proprietor: Furuno Electric Company, Limited, Nishinomiya-City Hyogo (JP)
(72) Inventor: Matsumura, Takashi, Nishinomiya-City, Hyogo (JP); Nishiyama, Yoshihiro, Nishinomiya-City, Hyogo (JP); Onishi, Yuriko, Nishinomiya-City, Hyogo (JP); Onishi, Yuji, Nishinomiya-City, Hyogo (JP); Hazama, Takuto, Nishinomiya-City, Hyogo (JP)
(74) Representative: CSY London

(56) References cited:
- JP-A- 2005 249 398
- JP-A- 2013 057 609
- US-A1- 2008 080 317
- US-A1- 2015 234 046

## Description

### Technical Field

This disclosure relates to an underwater detection device, which detects a target object underwater.

### Background of the Invention

As conventional underwater detection devices, devices which determine that echo signals indicate a school of fish and issue an alarm when intensities of the detected echo signals exceed a certain level, and devices which issue an alarm when a body length of a detected single fish is within a specific range, are known. For example, JP1994-072924B discloses a fish finder which sounds a buzzer when echoes corresponding to a school of fish exist within a school of fish alarm range R. Further, Paragraph [0010] of JP1996-029531A discloses a fish finder which determines given reflection echoes as echoes from a school of fish and issues an alarm.

Moreover, for example, JP4475982B discloses in Figs. 5A and 5B that a histogram generated for every body length of a detected single fish within a given area is displayed on a display unit of a fish finder.

However, by simply issuing the alarm when the echoes relating to the school of fish exceed a given value as disclosed in JP1994-072924B and JP1996-029531A described above, unnecessary information to a user may be notified. For example, the alarm may be issued even when a kind of a school of fish which is different from a fishing target of the user is detected.
US 2008/0080317 discloses a fishfinder for identifying a single fish and measuring its length. A transmission and reception device receives echoes reflected by a single fish, and the target strength and length of the fish are determined. Echo images of the fish are generated and displayed. An alarm may be generated when a single fish with a length greater than a threshold is detected.

### Summary of the Invention

The purpose of this disclosure relates to providing an underwater detection device, which determines that a detected school of fish is a desired school of fish and suitably notifies the determination result to a user.

According to one aspect of the present invention there is provided an underwater detection device as defined in claim 1.

Preferred features of the invention are recited in the dependent claims.

The frequency distribution characteristic value calculating module may calculate the frequency distribution characteristic value based on a single-fish number in a first particular category in the frequency distribution and a single-fish number in a second particular category that is other than the first particular category in the frequency distribution.

The first particular category may be determined based on an input by a user.

The underwater detection device may further include a memory configured to store a reference frequency distribution. The frequency distribution characteristic value calculating module may calculate the frequency distribution characteristic value based on a similarity between the frequency distribution and the reference frequency distribution.

The frequency distribution characteristic value calculating module may also calculate a total number of single fishes in the frequency distribution as the frequency distribution characteristic value.

The underwater detection device may further include a display unit configured to display a particular single fish index value that is an index value of one of body lengths and weights of single fishes in a category that has a largest single-fish number among a plurality of categories in the frequency distribution. The particular single fish index value displayed on the display unit may be displayed in a larger size than any other character and number displayed on the display unit.

The underwater detection device may further include a display unit configured to display, as a particular single fish index value, one of a single-fish number in a particular category in the frequency distribution and a ratio of a single-fish number in the particular category in the frequency distribution with respect to a total number of single fishes in the frequency distribution. The particular single fish index value displayed on the display unit may be displayed in a larger size than any other character and number displayed on the display unit.

The display unit may display the particular single fish index values for the single fishes in a plurality of categories specified by a user.

The display unit may display a first screen image and a second screen image to be switchable therebetween, the particular single fish index value being displayed in the first screen image and the second screen image. The particular single fish index value may be displayed in a larger size in the first screen image than in the second screen image.

When an element in a frequency distribution graph generated based on the frequency distribution and displayed on a display unit is specified by a user, one of a mark, a dot and a line indicating the element may be emphasized by being thickened.

According to another aspect of the present invention there is provided an underwater detection method as defined in claim 12.

### Effect of the Invention

According to the present disclosure, an underwater detection device which determines that a detected school of fish is a desired school of fish and suitably notifies the determination result to a user can be provided.

### Brief Description of the Drawings

The present disclosure is illustrated by way of example and not by way of limitation in the figures of the accompanying drawings, in which like reference numerals indicate like elements and in which:
Fig. 1 is a block diagram illustrating a configuration of a fish finder according to one embodiment of this disclosure;
Fig. 2 is a block diagram illustrating a receiver, a signal processor, an interface display device, and an alarm issuer in Fig. 1, illustrating specifically configurations of the signal processor and the interface display device;
Fig. 3 is a view illustrating an example of an echo screen image generated based on image signals of a target object which are generated by an image signal generating module;
Fig. 4 is a view illustrating an example of a first screen image which is a sub-screen image generated by a first screen image generating module;
Fig. 5 is a view illustrating an example of a second screen image which is a sub-screen image generated by a second screen image generating module;
Fig. 6 is a view illustrating an example of a display screen of a display unit of the interface display device in a state where the first screen image is displayed as the sub-screen image;
Fig. 7 is a view illustrating an example of the display screen of the display unit of the interface display device in a state where the second screen image is displayed as the sub-screen image;
Fig. 8 is a view illustrating an example of the display screen of the display unit of the interface display device in a state where the first screen image is displayed as the sub-screen image, in which first and second peak body lengths are displayed in the first screen image;
Fig. 9 is a view illustrating an example of the display screen of the display unit of the interface display device in a state where the second screen image is displayed as the sub-screen image, in which the first and second peak body lengths are displayed in the second screen image;
Fig. 10 is a view illustrating an example of the display screen of the display unit of the interface display device in a state where the first screen image is displayed as the sub-screen image, in which first to third peak body lengths are displayed in the first screen image;
Fig. 11 is a view illustrating an example of the display screen of the display unit of the interface display device in a state where the second screen image is displayed as the sub-screen image, in which the first to third peak body lengths are displayed in the second screen image;
Fig. 12 is a block diagram illustrating specifically a configuration of a signal processor of a fish finder according to a modification;
Fig. 13 shows graphs illustrating an example of a calculation method of a similarity calculated by a frequency distribution similarity calculating submodule;
Fig. 14 is a block diagram illustrating specifically a configuration of a signal processor of a fish finder according to another modification;
Fig. 15A is an enlarged view of a peak portion of a frequency distribution graph of a certain school of fish, and 15B is an enlarged view of a peak portion of a frequency distribution graph of a different school of fish from that in Fig. 15A;
Fig. 16 is a block diagram illustrating specifically a configuration of a signal processor of a fish finder according to another modification;
Fig. 17 is a view illustrating a display screen of a display unit of a fish finder according to another modification, after a certain period of time from a timing at which an alarm icon is displayed (from the state of the display screen illustrated in Fig. 6);
Fig. 18 is a block diagram illustrating specifically a configuration of a signal processor of a fish finder according to another modification;
Fig. 19 is a view illustrating an example of a display screen of displayed on a display unit of a fish finder according to the modification, in which a first screen image is displayed as a sub-screen image;
Fig. 20 is a view illustrating an example of the display screen of the display unit of the fish finder according to the modification, in which a second screen image is displayed as the sub-screen image;
Fig. 21 is a view illustrating a display screen of a display unit of a fish finder according to another modification, in which a first screen image is displayed as a sub-screen image; and
Fig. 22A is a view illustrating a first screen image displayed on a display screen of a fish finder according to another modification, and Fig. 22B is a view illustrating a second screen image displayed on the display screen of the fish finder according to this modification.

### Detailed Description of the Invention

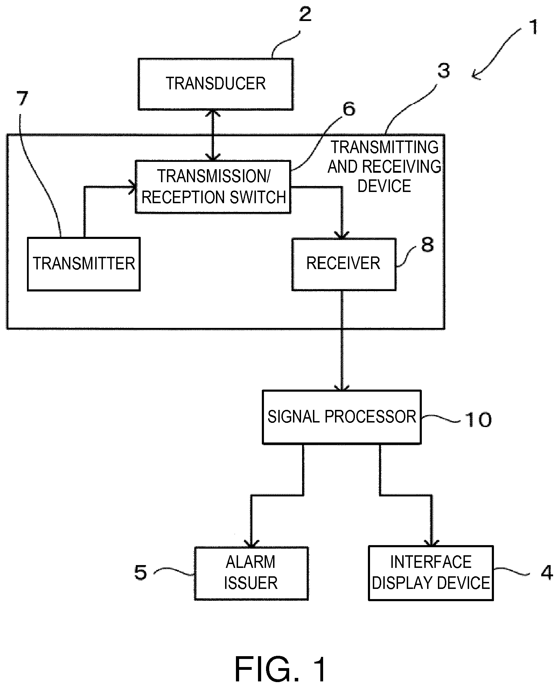

In the following embodiments, an example is illustrated in which this disclosure is applied to a ship. However, the present disclosure may be applied to any other watercrafts including boats (e.g., fishing boat), vessels, and submarines. Hereinafter, a fish finder 1 of one embodiment is described with reference to the accompanying drawings. Fig. 1 is a block diagram illustrating a configuration of the fish finder 1 (underwater detection device) according to the embodiment of this disclosure. The fish finder 1 of this embodiment and detects fish underwater.

### [Overall Configuration]

As illustrated in Fig. 1, the fish finder 1 includes a transducer 2, a transmitting and receiving device 3, a signal processor 10, an interface display device 4, and an alarm issuer 5.

The transducer 2 is comprised of at least one ultrasonic oscillator. The transducer 2 converts an electric signal into an ultrasonic wave and transmits it underwater as a transmission wave (transmission signal) at every given timing. Further, the transducer 2 receives as a reception wave (reception signal, echo signal) a reflection wave caused by the transmitted ultrasonic wave and converts the reception wave into an electric signal.

The transmitting and receiving device 3 includes a transmission/reception switch 6, a transmitter 7, and a receiver 8. In transmission, the transmission/reception switch 6 switches its connection so that the transmission signal is transmitted from the transmitter 7 to the transducer 2. In reception, the transmission/reception switch 6 switches the connection so that electric signal converted from the ultrasonic wave by the transducer 2 is transmitted from the transducer 2 to the receiver 8.

The transmitter 7 outputs to the transducer 2 via the transmission/reception switch 6, the transmission signal generated based on a condition designed by the interface display device 4. The transmitter 7 outputs to the transducer 2 a signal based on which the ultrasonic wave transmitted by the transducer 2 is generated.

The receiver 8 amplifies the electric signal transmitted by the transducer 2 and AD-converts the amplified electric signal. Then, the receiver 8 outputs the reception signal converted into a digital signal, to the signal processor 10.

The signal processor 10 processes the reception signal outputted by the receiver 8, and outputs the processing result to the interface display device 4 and the alarm issuer 5. In this embodiment, the signal processor 10 performs the following three processings: generating an image signal of a target object (hereinafter, an image signal of a target object is referred to as "the target image signal"); generating a given display image based on a frequency distribution generated by classifying, using body length, single fishes detected within a given range by the fish finder 1; and issuing an alarm based on frequency distribution characteristic values calculated based on the frequency distribution.

### [Configuration of Signal Processor]

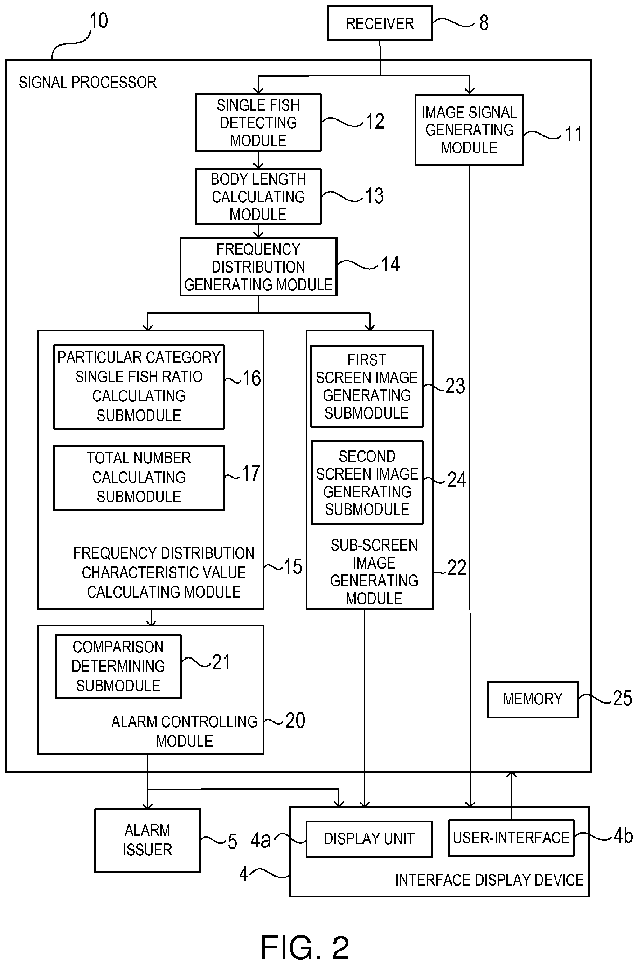

Fig. 2 is a block diagram illustrating the receiver 8, the signal processor 10, the interface display device 4, and the alarm issuer 5 in Fig. 1, illustrating specifically configurations of the signal processor 10 and the interface display device 4. As illustrated in Fig. 2, the signal processor 10 includes an image signal generating module 11, a single fish detecting module 12, a body length calculating module 13, a frequency distribution generating module 14, a frequency distribution characteristic value calculating module 15, an alarm controlling module 20, a sub-screen image generating module 22, and a memory 25. For example, the signal processor 10 is comprised of devices, such as processors (CPU, FPGA, etc.) which are not illustrated, and a memory. For example, the CPU reads a program from the memory and executes it. Thus, the signal processor 10 functions as the image signal generating module 11, the single fish detecting module 12, the body length calculating module 13, the frequency distribution generating module 14, etc.

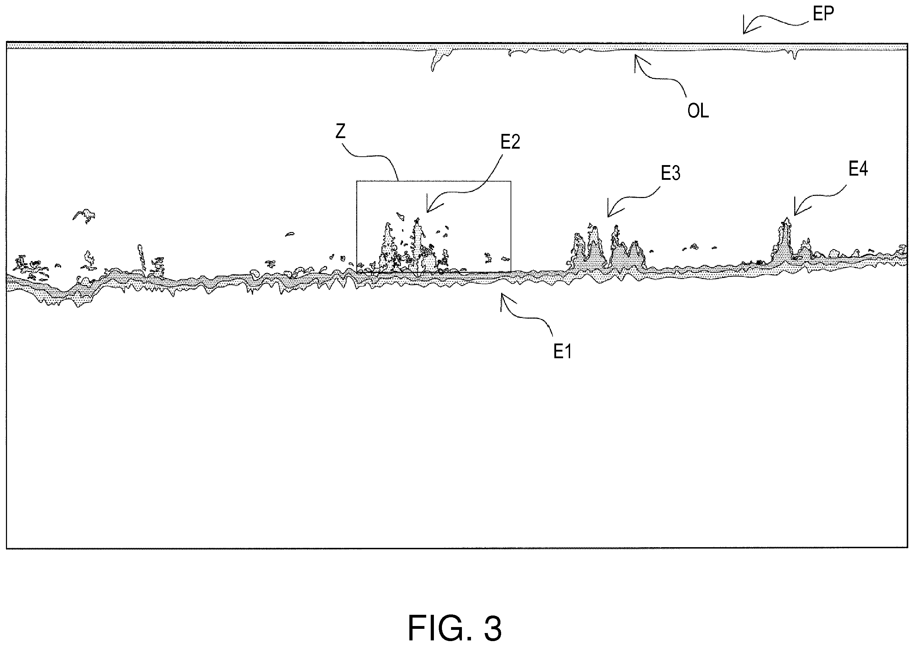

Fig. 3 is a view illustrating an example of an echo screen image EP generated based on the target image signal generated by the image signal generating module 11.

The image signal generating module 11 processes the reception signal outputted by the receiver 8 and generates the target image signal. The image signal generated by the image signal generating module 11 is transmitted to the interface display device 4, and the interface display device 4 displays the echo screen image EP underwater based on the image signal. In the echo screen image EP illustrated in Fig. 3, the vertical axis corresponds to a water depth direction, and a unit of numerical value on the horizontal axis is ping. One ping corresponds to one pulse of ultrasonic wave transmitted at a certain timing.

Note that in Fig. 3, an intensity of an echo signal is illustrated corresponding to a density of the stippling for the sake of convenience. Practically, on a display unit 4a of the interface display device 4, an underwater location with high echo intensity is illustrated in brown and the color tone changes in the order of red, orange, yellow, green and blue as the echo intensity decreases. Further in Fig. 3, the part indicated with a reference character OL is an oscillation line, and the part extending in left-and-right directions of the drawing and indicated with a reference character E1 is echoes E1 from a water bottom, the part indicated with a reference character E2 is echoes E2 from a school of fish, the part indicated with a reference character E3 is echoes E3 from a fish bed and a school of fish gathered on the fish bed. Moreover, a rectangular frame indicated with a reference character Z is, as described later in detail, a given range (target zone Z) designed by a user.

The single fish detecting module 12 detects each single fish as the target object, based on the reception signals outputted by the receiver 8. Specifically, the single fish detecting module 12 detects the single fish by determining whether a peak waveform formed by the reception signals plotted on a coordinate system of which the horizontal axis is time and the vertical axis is amplitude value, is a waveform caused by a single fish. A peak value of the peak waveform is a target strength value (TS value) of the single fish. The single fish detecting module 12 determines whether the peak waveform is the waveform caused by a single fish by comprehensively taking into consideration the peak value of the peak waveform, an inclination of a rise portion of the peak waveform, an inclination of a fall portion of the peak waveform, etc. By comprehensively taking into consideration the plurality of parameters as above, an error detection of the single fish is avoided. Note that, since the detection method of the single fish described here is a conventional method which is generally known, the specific description thereof is omitted. Moreover, the operation of the single fish detecting module 12 described here is merely an example, and the single fish may be detected by other method.

The body length calculating module 13 calculates a body length of the single fish based on the TS value of the single fish detected by the single fish detecting module 12.

The frequency distribution generating module 14 generates the frequency distribution by categorizing, using body length, single fishes in the target zone Z of the echo screen image EP displayed on the display unit 4a of the interface display device 4. The target zone Z is designed by the user through suitably controlling a user-interface 4b of the interface display device 4.

The frequency distribution characteristic value calculating module 15 calculates the frequency distribution characteristic values which are values indicating characteristics of the frequency distribution generated by the frequency distribution generating module 14. The frequency distribution characteristic value calculating module 15 includes a particular category single fish ratio calculating submodule 16, and a total number calculating submodule 17.

The particular category single fish ratio calculating submodule 16 calculates a ratio of the number of single fishes (single-fish number) in a particular category (first particular category) of the frequency distribution generated by the frequency distribution generating module 14, with respect to a total number of single fishes in the frequency distribution (hereinafter, referred to as "the particular category single fish ratio"). The particular category single fish ratio is calculated as one of the frequency distribution characteristic values. The particular category is designed by the user through suitably controlling the user-interface 4b of the interface display device 4. When calculating the particular category single fish ratio at a certain timing, the particular category single fish ratio calculating submodule 16 calculates the particular category single fish ratio based on the particular category stored in the memory 25 at this timing.

The total number calculating submodule 17 calculates the total number of the single fishes in the frequency distribution generated by the frequency distribution generating module 14 (hereinafter, referred to as "the total single fish number"). The total single fish number is calculated as one of the frequency distribution characteristic values.

The alarm controlling module 20 controls the alarm from the alarm issuer 5 based on comparison results of the frequency distribution characteristic values calculated by the frequency distribution characteristic value calculating module 15 (the particular category single fish ratio and the total single fish number) with thresholds (first and second thresholds), respectively. The first threshold is the comparison target of the particular category single fish ratio calculated by the particular category single fish ratio calculating submodule 16. Further the second threshold is the comparison target of the total single fish number calculated by the total number calculating submodule 17.

The alarm controlling module 20 has a comparison determining submodule 21. The comparison determining submodule 21 compares the particular category single fish ratio with the first threshold stored in the memory 25, and also compares the total single fish number with the second threshold stored in the memory 25. If the particular category single fish ratio is above the first threshold and the total single fish number is above the second threshold, the alarm controlling module 20 outputs alarm signals to both of the interface display device 4 and the alarm issuer 5. On the other hand, if the particular category single fish ratio is the first threshold or below and/or the total single fish number is the second threshold or below, the alarm controlling module 20 does not output the alarm signals to the interface display device 4 and the alarm issuer 5.

The memory 25 is constructed by a hardware memory. The memory 25 stores the first threshold, the second threshold, and the particular category which are described above. Note that these parameters stored in the memory 25 are changed by the user through suitably controlling the user-interface 4b of the interface display device 4.

The sub-screen image generating module 22 generates a sub-screen image to be displayed on the display unit 4a of the interface display device 4. Here, the sub-screen image is a screen image smaller than the echo screen image EP, displayed by being superimposed on the echo screen image EP displayed over the entire display screen of the display unit 4a (see Fig. 3). The sub-screen image generating module 22 has a first screen image generating submodule 23 and a second screen image generating submodule 24.

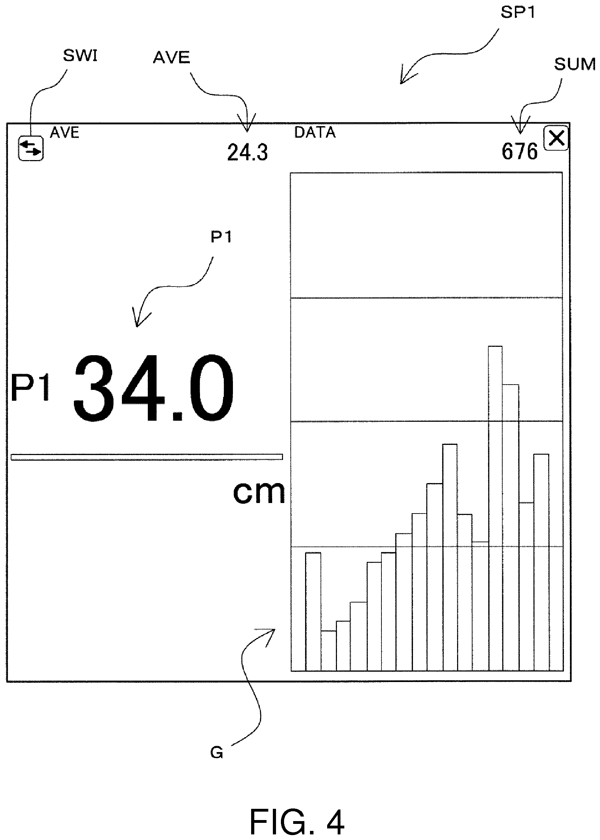

Fig. 4 is a view illustrating an example of a first screen image SP1 which is a sub-screen image generated by the first screen image generating submodule 23. The first screen image generating submodule 23 generates the first screen image SP1 described below.

The first screen image SP1 indicates information relating to the single fishes in the frequency distribution, obtained based on the frequency distribution generated by the frequency distribution generating module 14. Specifically in the first screen image SP1, as illustrated in Fig. 4, a frequency distribution graph G generated based on the frequency distribution which is generated by the frequency distribution generating module 14, an index value of the body lengths of the single fishes in a category with a largest number of single fishes in the frequency distribution, the total single fish number SUM in the frequency distribution, and an average value AVE of the body lengths of the single fishes in the frequency distribution are displayed.

Note that below, the index value (the index value of the body lengths of the single fishes in the category with the largest number of single fishes in the frequency distribution) is referred to as a first peak body length P1 (particular single fish index value). As the particular single fish index value, a value in the category with the largest number of single fishes is used. Specifically, when the category with the largest number of single fishes is 32 to 36cm for example, the center value of the category, 34cm, is used as the particular single fish index value. The vertical axis of the frequency distribution graph G expresses in percentage (%) the ratio of the number of the singe fishes in each category with respect to the total number of single fishes in the frequency distribution. Moreover, although not illustrated, elements EL configuring the frequency distribution graph G are assigned with different color tones from each other.

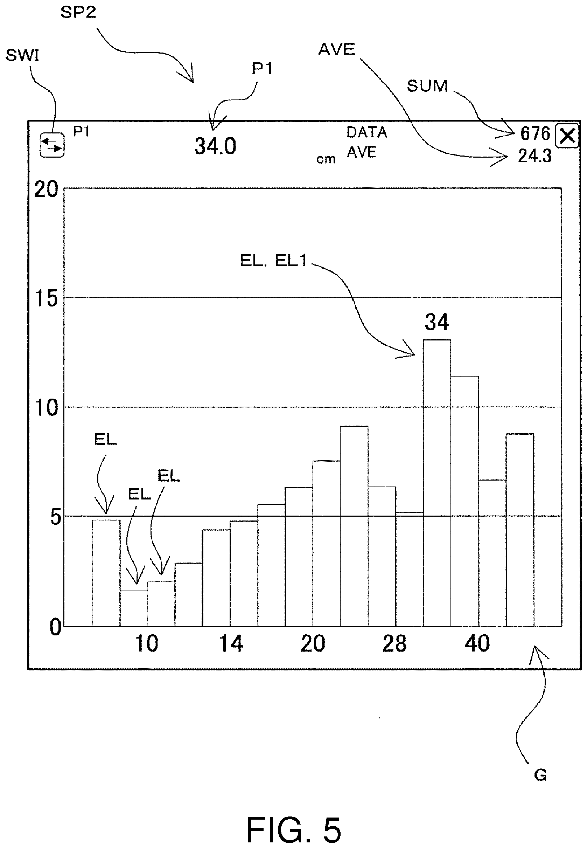

Further, on the first screen image SP1, the first peak body length P1 is displayed by an Arabic numeral in a large size in a left-half area thereof, and the frequency distribution graph G is displayed in a right-half area. Note that the total single fish number SUM and the average value AVE of the single fishes are displayed by Arabic numerals in a small size in an upper part of the image. The value of the first peak body length P1 is displayed in the first screen image SP1 in a larger size than that of the value of the first peak body length displayed on an interface display device of a conventional fish finder. With the interface display device of the conventional fish finder, the first peak body length is displayed, for example, in a size illustrated in Fig. 5 of which description is given below.

Fig. 5 is a view illustrating an example of a second screen image SP2 which is a sub-screen image generated by the second screen image generating submodule 24. The second screen image generating submodule 24 generates the second screen image SP2 described below.

Also in the second screen image SP2, similar to the first screen image SP1, information relating to the single fishes in the frequency distribution, obtained based on the frequency distribution generated by the frequency distribution generating module 14, is displayed. However, the displayed size of each information is greatly different from the first screen image SP1. Specifically in the second screen image SP2, as illustrated in Fig. 5, the frequency distribution graph G is displayed in a large size substantially over the entire second screen image SP2, and the first peak body length P1, the total single fish number SUM, and the average value AVE of the single fishes are displayed by Arabic numerals in a small size.

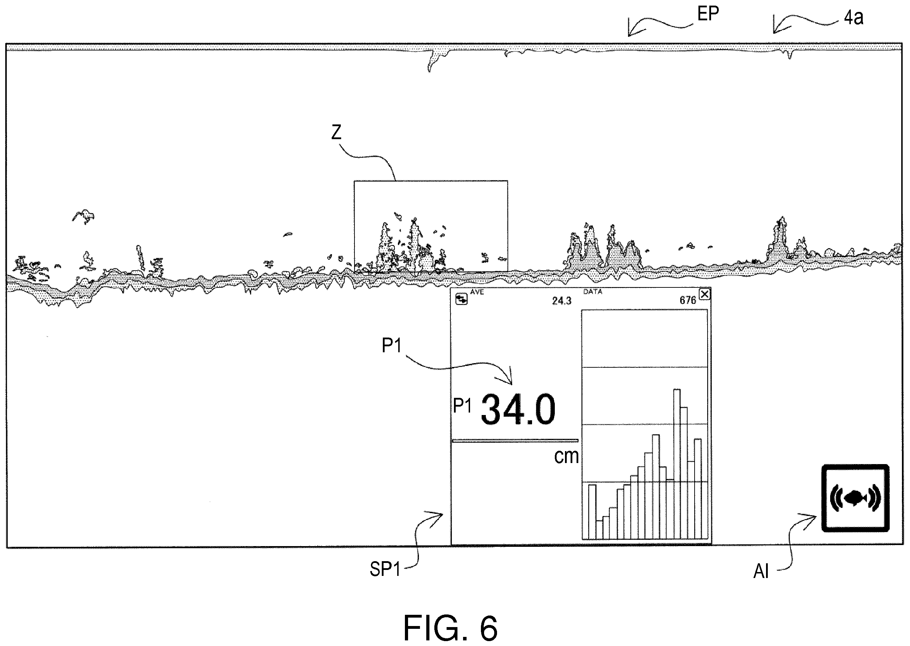

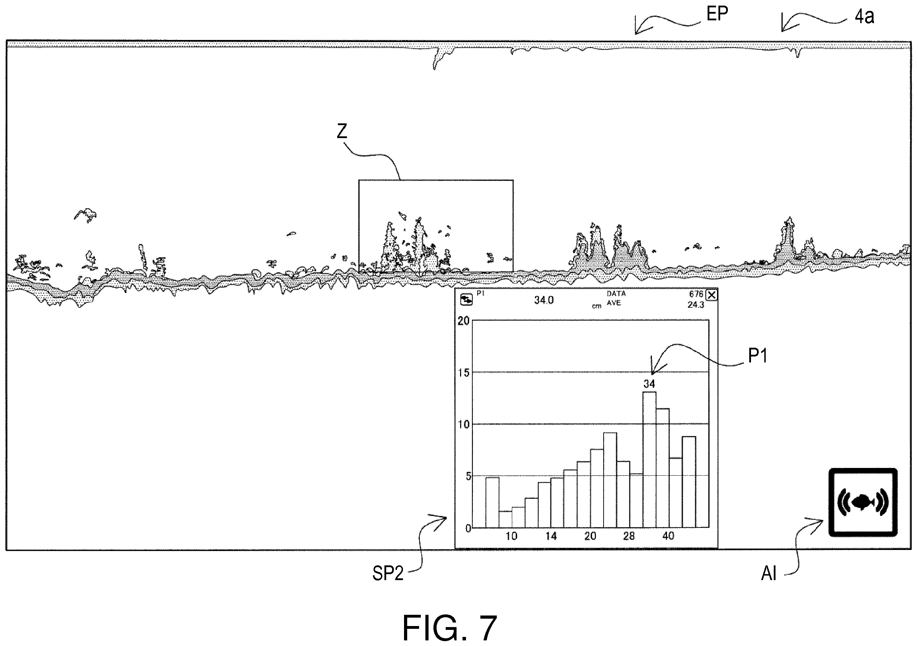

Fig. 6 is a view illustrating an example of the display screen of the display unit 4a of the interface display device 4 in a state where the first screen image SP1 is displayed as the sub-screen image. Further, Fig. 7 is a view illustrating an example of the display screen of the display unit 4a of the interface display device 4 in a state where the second screen image SP2 is displayed as the sub-screen image.

The display unit 4a of the interface display device 4 displays the image corresponding to the image signals outputted by the signal processor 10 (echo screen image EP), and one of the first and second screen images SP1 and SP2 generated by the sub-screen image generating module 22. In the echo screen image EP, an image for a single vertical segment obtained based on a latest image signal is displayed as a rightmost vertical line in the image EP, and a previous image shifts leftward by one ping at a time, every time the latest image signal is obtained. Specifically, the echo screen image EP scrolls leftward with time. The user looks at the display screen and can estimate an underwater state below the ship (existence and positions of the single fishes, the school of fish, rise and fall of the water bottom, and a structure such as the fish bed).

Further the display unit 4a receives the alarm signal from the alarm controlling module 20, and displays an alarm icon AI (alarm). Specifically, when the comparison determining submodule 21 determines that the particular category single fish ratio is above the first threshold and the total single fish number is above the second threshold, the display unit 4a displays the alarm icon AI (fish body length graph alarm icon).

The user-interface 4b is comprised of a keyboard or a mouse, for example. By suitably controlling the user-interface 4b, the user may perform various input operations on the interface display device 4. Specifically, the user may perform the following input operations by controlling the user-interface 4b. Here, the definition of the user includes a person who actually catches the fish by using the fish finder 1, and also a serviceman who changes the settings of the fish finder 1 upon a request from the person.

The user may design the target zone Z for which the frequency distribution is generated, by suitably controlling the user-interface 4b. Specifically, for example, by selecting any two points on a main screen image (echo screen image EP) with the mouse, the user may design the target zone Z into a rectangular shape which has a diagonal line connecting the two points. When the user designs the target zone Z, the frequency distribution generating module 14 generates the frequency distribution of all the single fishes in the target zone Z. Further, the sub-screen image generating module 22 generates the first and second screen images SP1 and SP2 based on the frequency distribution, and the first screen image SP1 is displayed on the display unit 4a (see Fig. 6). Note that, although not illustrated, the user may design the target zone Z to cover the entire range of the main screen image or a given range with reference to the water bottom. Further, the target zone Z continues to be displayed at the same position on the display unit 4a, in disregard of time. In other words, the target zone Z does not scroll leftward with the echo screen image EP.

Additionally, the user may switch the first screen image SP1 to the second screen image SP2 by suitably controlling the user-interface 4b. Specifically, the user may switch the first screen image SP1, which is displayed as the sub-screen image, to the second screen image SP2 by selecting (e.g., clicking with the mouse) a screen switch icon SWI displayed at an upper-left position of the first screen image SP1 (see Fig. 4). Note that, in the state where the second screen image SP2 is displayed as the sub-screen image, the user may switch the second screen image SP2 to the first screen image SP1 by selecting the screen switch icon SWI displayed at an upper-left position of the second screen image SP2 (see Fig. 5).

Note that, as another method of switching between the first and second screen images SP1 and SP2, with reference to Fig. 5, it may be considered that the user clicks with the mouse, an element EL1 with the largest number of single fishes among the elements EL configuring the frequency distribution graph G of the second screen image SP2 (bar-shaped parts indicating by their lengths the ratios of the numbers of single fishes in the respective categories with respect to the total number of single fishes in the frequency distribution) so as to switch the displayed image. Alternatively, a method may be considered that the user selects one of the first and second screen images SP1 and SP2 on a menu screen (not illustrated).

Further by suitably controlling the user-interface 4b, the user may set the first and second thresholds described above to any values. Specifically, the user selects desired numeric values from a plurality of given numeric values for the first and second thresholds, and thereby, the first and second thresholds stored in the memory 25 at this timing are updated to be replaced by the first and second thresholds which are newly selected by the user.

Further by suitably controlling the user-interface 4b, the user may set the particular category described above to any category. Specifically, the user selects a desired category from a plurality of given categories for the particular categories, and thereby, the particular category stored in the memory 25 at this timing is updated to be replaced by the particular category which is newly selected by the user.

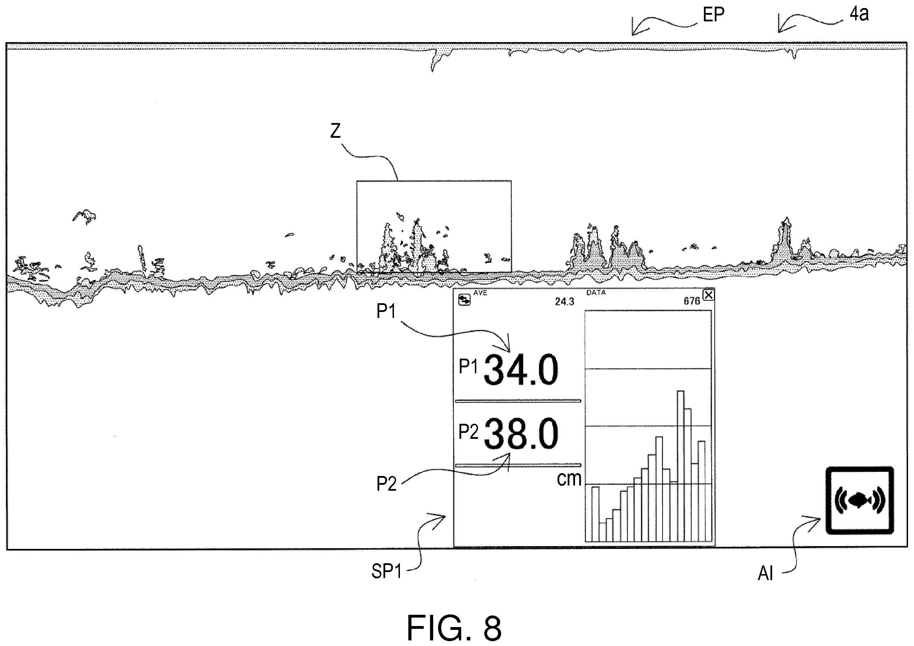

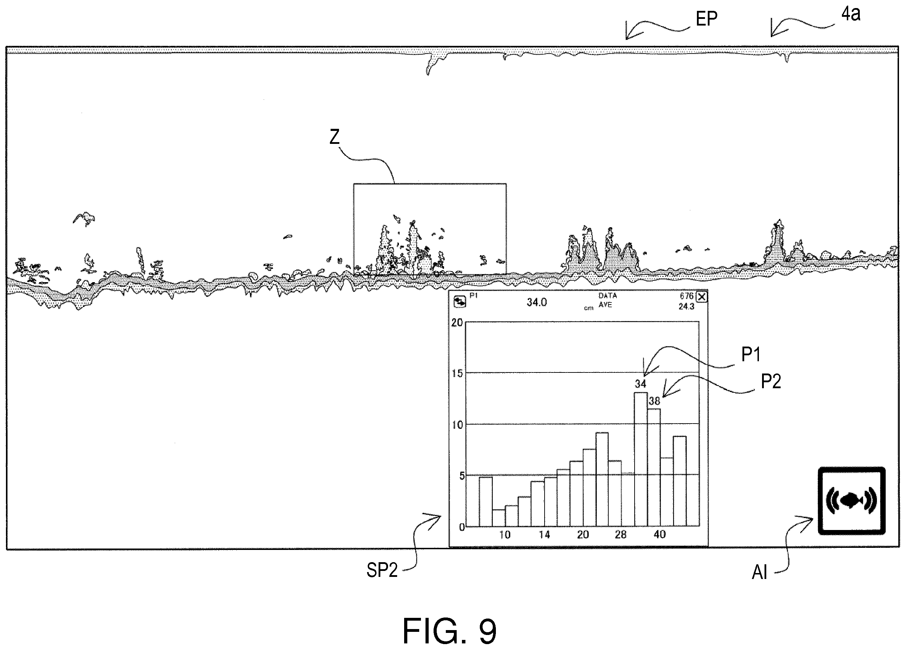

Further by suitably controlling the user-interface 4b, as illustrated in Fig. 8, the user may display in the first screen image the first peak body length P1 described above and a second peak body length P2 (an index value of a body length of the single fishes in a category with the second largest number of single fishes in the frequency distribution, i.e., particular single fish index value). Specifically, the user selects, for example, on a setting screen (not illustrated), an item for displaying the first and second peak body lengths P1 and P2 in the first screen image SP1, and thereby, the first and second peak body lengths P1 and P2 are displayed in the first screen image SP1 in a large size as illustrated in Fig. 8. By a similar change in the setting by the user, the first and second peak body lengths P1 and P2 are displayed in the second screen image SP2 in a small size as illustrated in Fig. 9.

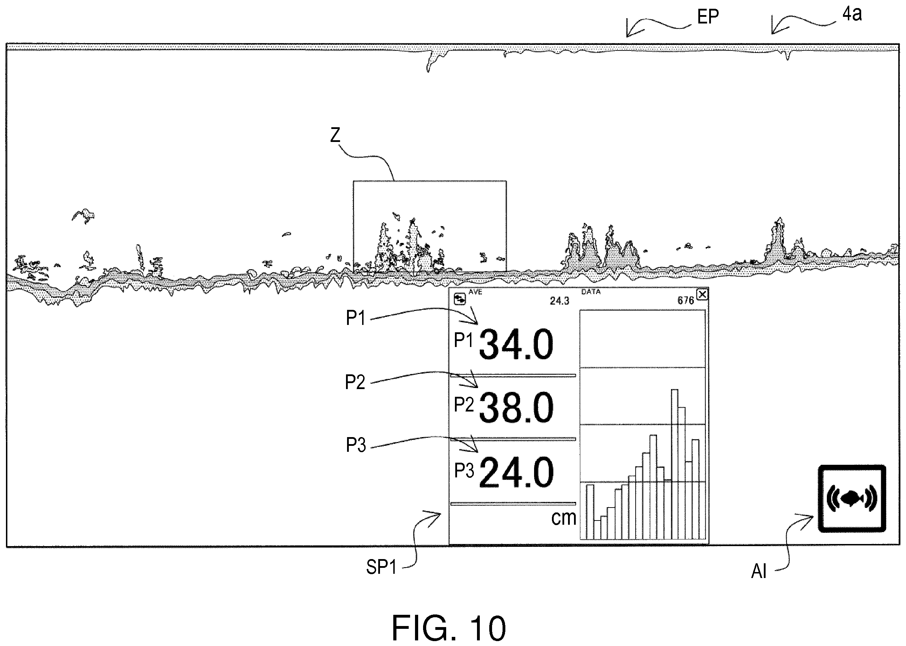

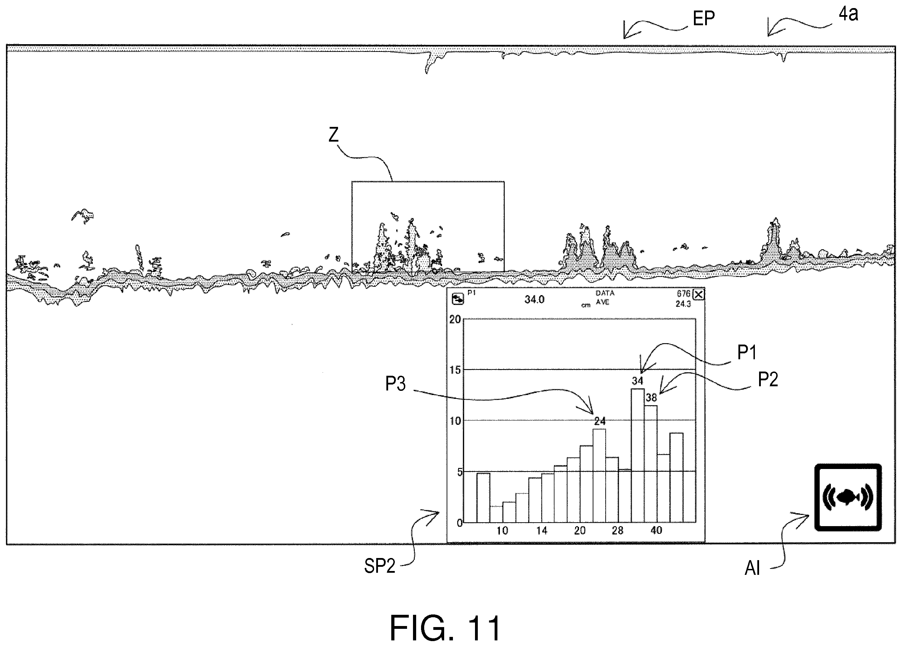

Further by suitably controlling the user-interface 4b, as illustrated in Fig. 10, the user may display in the first screen image SP1 a third peak body length P3 (an index value of body lengths of the single fishes in a category with the third largest number of single fishes in the frequency distribution, i.e., particular single fish index value), as well as the first and second peak body lengths P1 and P2 described above. Specifically, the user selects, for example, on a setting screen (not illustrated) an item for displaying the first to third peak body lengths P1 to P3 in the first screen image SP1, and thereby, the first to third peak body lengths P1 to P3 are displayed in the first screen image SP1 in a large size as illustrated in Fig. 10. By a similar change in the setting by the user, the first to third peak body lengths P1 to P3 are displayed in the second screen image SP2 in a small size as illustrated in Fig. 11.

Further by suitably controlling the user-interface 4b, the user may select a plurality of target zones Z. In this manner, although not illustrated, the display unit 4a displays one of first screen images and second screen images generated based on frequency distributions corresponding to the target zones Z, respectively.

Further by suitably controlling the user-interface 4b, the user may switch the peak body lengths P1 to P3 displayed on the display unit 4a, to peak weights (first to third peak weights) as the particular single fish index values. The first peak weight is an index value of weights of single fishes in the category with the largest number of single fishes in the frequency distribution, the second weight is an index value of weights of single fishes in the category with the second largest number of single fishes in the frequency distribution, and the third weight is an index value of weights of single fishes in the category with the third largest number of single fishes in the frequency distribution.

As the alarm issuer 5, a buzzer configured to issue an alarm sound (alarm) is used, for example. The alarm issuer 5 issues the alarm sound, upon receiving the alarm signal from the alarm controlling module 20. In other words, the alarm issuer 5 issues the alarm sound when the particular category single fish ratio is above the first threshold and the total single fish number is above the second threshold.

### [Effects]

As described above, with the fish finder 1 of this embodiment, the issuance of the alarm is controlled based on the frequency distribution characteristic values indicating the characteristics of the frequency distribution of the single fishes of the school of fish (in this embodiment, the particular category single fish ratio and the total single fish number). Since characteristics of schools of fish vary in terms of the frequency distribution depending on, for example, fish kind, by controlling the issuance of the alarm based on the frequency distribution characteristic values, whether the detected school of fish is a desired school of fish is accurately determined. Further with the fish finder 1, the alarm issuer 5 issues the alarm sound and the display unit 4a displays the alarm icon AI, upon receiving the alarm signal from the alarm controlling module 20. Thus, the detection of the desired school of fish is suitably notified to the user.

Therefore, according to the fish finder 1, the fish finder which determines whether the detected school of fish is the desired school of fish and suitably notifies the determination result to the user is provided.

Further with the fish finder 1, the issuance of the alarm is controlled based on the particular category single fish ratio (the ratio of the number of single fishes in the particular category of the frequency distribution with respect to the total number of single fishes in the frequency distribution). Since the particular category single fish ratio has different characteristics for every fish kind, by controlling the issuance of the alarm based on the particular category single fish ratio, whether the detected school of fish is the desired school of fish is accurately determined.

Further with the fish finder 1, the user can set the particular category among the plurality of categories of the frequency distribution. Therefore, it is possible to change the particular category based on the fish kind as the fishing target, hydrographic conditions, or a marine area. Thus, the fish finder with high general versatility is provided.

Further according to the fish finder 1, the first threshold which is the comparison target of the particular category single fish ratio, and the second threshold which is the comparison target of the total single fish number are set by the user. Thus, it is possible to change each threshold based on the fish kind as the fishing target, hydrographic conditions, or a marine area. Thus, the fish finder with high general versatility is provided.

Further with the fish finder 1, the alarm is issued based on the comparison results of the frequency distribution characteristic values (the particular category single fish ratio and the total single fish number) with the thresholds (the first and second thresholds), respectively. Thus, the alarm is suitably issued.

Further with the fish finder 1, the issuance of the alarm is controlled also based on the total single fish number. A frequency distribution graph with large total single fish number has higher reliability than a graph with small total single fish number. Therefore, by using the total single fish number as the material for determining whether to issue the alarm, the reliability of the alarm is increased.

Further with the fish finder 1, the peak body lengths P1 to P3 as the particular single fish index values are displayed in the larger size than the conventional size. Since many users catch fish based on the values of the peak body lengths P1 to P3, by displaying the peak body lengths P1 to P3 in the large size, visual recognizability of the peak body lengths P1 to P3 improves. Thus, the fish finder with high usability to such users is provided.

Further with the fish finder 1, the first screen image where the peak body lengths P1 to P3 are displayed in the large size, and the second screen image where the frequency distribution graph G of the school of fish is displayed in the large size are displayed to be switchable. Therefore, the user can display one of the first and second screen images according to the situation. Thus, the fish finder with higher usability is provided.

Further with the fish finder 1, the plurality of peak body lengths P1 to P3 are displayed. Thus, the fish finder with high usability is provided.

### [Modifications]

Although the embodiment of this disclosure is described above, this disclosure is not limited to this, and various changes may be applied to the above configuration without deviating from the scope of this disclosure.

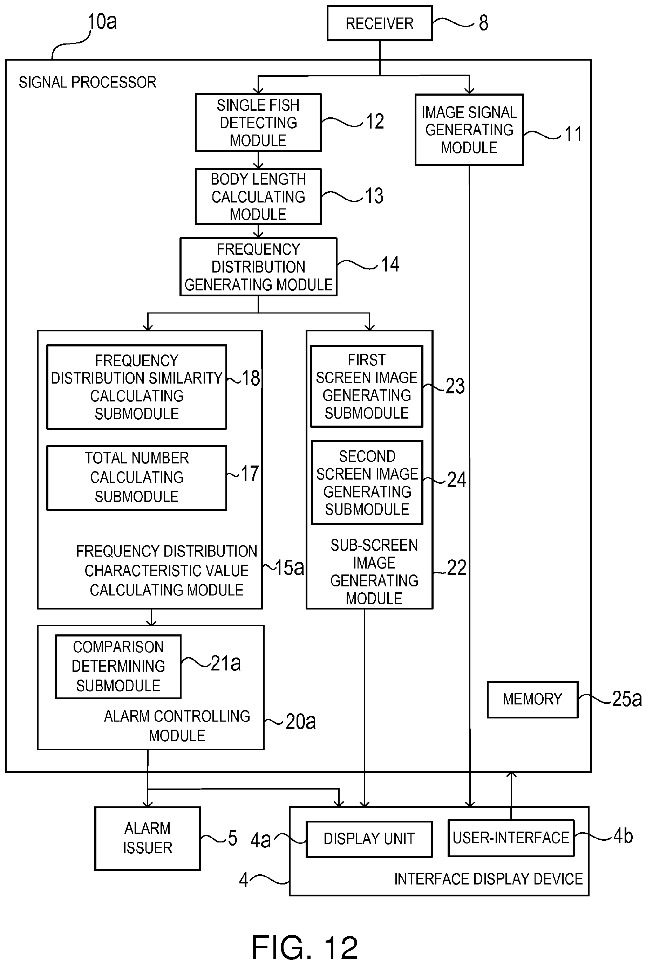

(1) Fig. 12 is a block diagram illustrating specifically a configuration of a signal processor 10a of a fish finder according to a modification. The fish finder of this modification is different from the fish finder 1 of the embodiment in configurations of the memory, the frequency distribution characteristic value calculating module, and the alarm controlling module. Hereinafter, the part that is different from the fish finder 1 of the embodiment is described while omitting description of other parts.

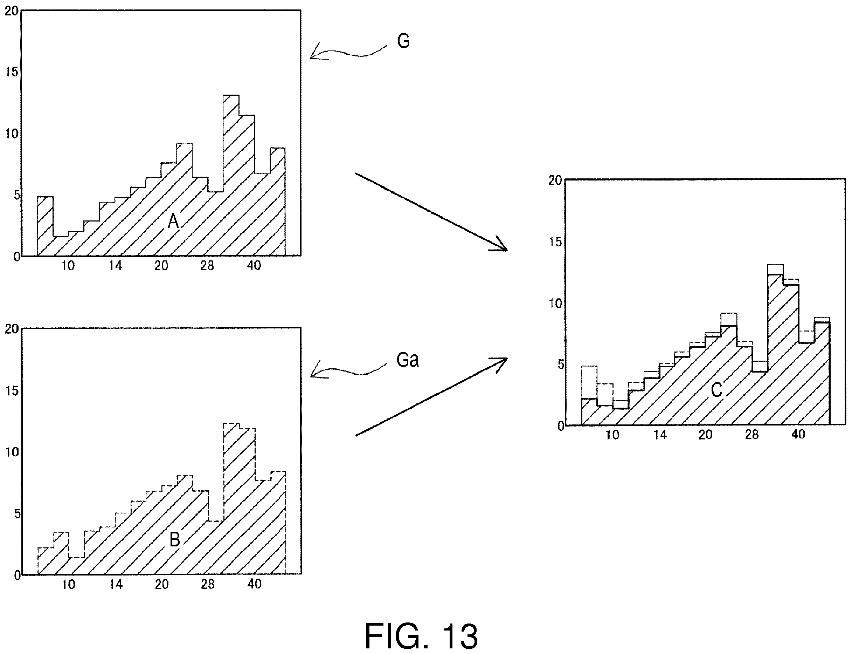

A memory 25a of this modification stores a reference frequency distribution graph Ga (see Fig. 13) and a third threshold, in addition to the second threshold described above (the threshold which is the comparison target of the total single fish number SUM). The reference frequency distribution graph Ga indicates a frequency distribution which is a comparison target of the frequency distribution generated by the frequency distribution generating module 14. The third threshold is a comparison target of a similarity calculated by a frequency distribution similarity calculating submodule 18 (described later in detail). Note that the similarity here is an index value indicating a degree of similarity between the frequency distribution generated by the frequency distribution generating module 14 and the reference frequency distribution. The similarity is one (1) when they match completely, and the similarity approaches zero (0) as the similarity becomes smaller.

A frequency distribution characteristic value calculating module 15a of this modification includes the frequency distribution similarity calculating submodule 18 and the total number calculating submodule 17. Since the configuration and operation of the total number calculating submodule 17 are the same as those of the embodiment, the description thereof is omitted.

Fig. 13 shows graphs illustrating an example of a calculation method of the similarity calculated by the frequency distribution similarity calculating submodule 18. The frequency distribution similarity calculating submodule 18 calculates the similarity between the frequency distribution graph G generated by the frequency distribution generating module 14 and the reference frequency distribution graph Ga, based on an overlapping area of the two frequency distributions. Specifically, the frequency distribution similarity calculating submodule 18 calculates, as the frequency distribution similarity (frequency distribution characteristic value), a ratio of the overlapping area C of the frequency distribution graph G and the reference frequency distribution graph Ga, with respect to an area A of the frequency distribution graph G (or an area B of the reference frequency distribution graph Ga).

An alarm controlling module 20a controls the alarm from the alarm issuer 5 based on comparison results of the frequency distribution characteristic values calculated by the frequency distribution characteristic value calculating module 15a (the frequency distribution similarity and the total single fish number) with the thresholds (the second and third thresholds), respectively. Specifically, the alarm controlling module 20a includes a comparison determining submodule 21a. The comparison determining submodule 21a compares the frequency distribution similarity with the third threshold, and compares the total single fish number with the second threshold. If the frequency distribution similarity is above the third threshold and the total single fish number is above the second threshold, the comparison determining submodule 21a outputs an alarm signal to the alarm issuer 5. On the other hand, if the frequency distribution similarity is the third threshold or below and/or the total single fish number is the second threshold or below, the comparison determining submodule 21a does not output the alarm signal to the alarm issuer 5.

Note that also in this modification, similar to the embodiment described above, by suitably controlling the user-interface 4b of the interface display device 4, the user may set the respective comparison target parameters (specifically, the second and third thresholds and the reference frequency distribution). Specifically, the user may set the second and third thresholds by selecting desired values from a plurality of given candidate values for the second and third thresholds. Further, the user may design the reference frequency distribution by selecting a desired template from a plurality of given templates for the reference frequency distribution.

Further, the user may store in the memory 25a the frequency distribution generated by the frequency distribution generating module 14 as a template, so that the frequency distribution is used as the reference frequency distribution. Here, the position (the relative position with respect to the ship, a height position from the water bottom, etc.) and size of the target zone Z for which the frequency distribution is obtained may also be stored in the memory 25a. In this manner, it becomes possible to store the frequency distribution and the target zone Z in a case where a large volume of fish is caught, and these may be used for the next fishing.

As described above, the fish finder of this modification controls the issuance of the alarm based on the similarity between the frequency distribution generated by the frequency distribution generating module 14 and the reference frequency distribution. Thus, the issuance of the alarm is controlled by comprehensively taking into consideration ratios of the single fishes in a plurality of categories.

Note that in this modification, the frequency distribution similarity is calculated based on the overlapping area of the frequency distribution graph and the reference frequency distribution graph; however, it is not limited to this. For example, the frequency distribution similarity may be calculated by using a pattern matching method. Alternatively, the frequency distribution similarity may be calculated based on an error ratio between the ratio of single fishes in each category of the frequency distribution generated by the frequency distribution generating module 14, and the ratio of single fishes in each category of the reference frequency distribution.

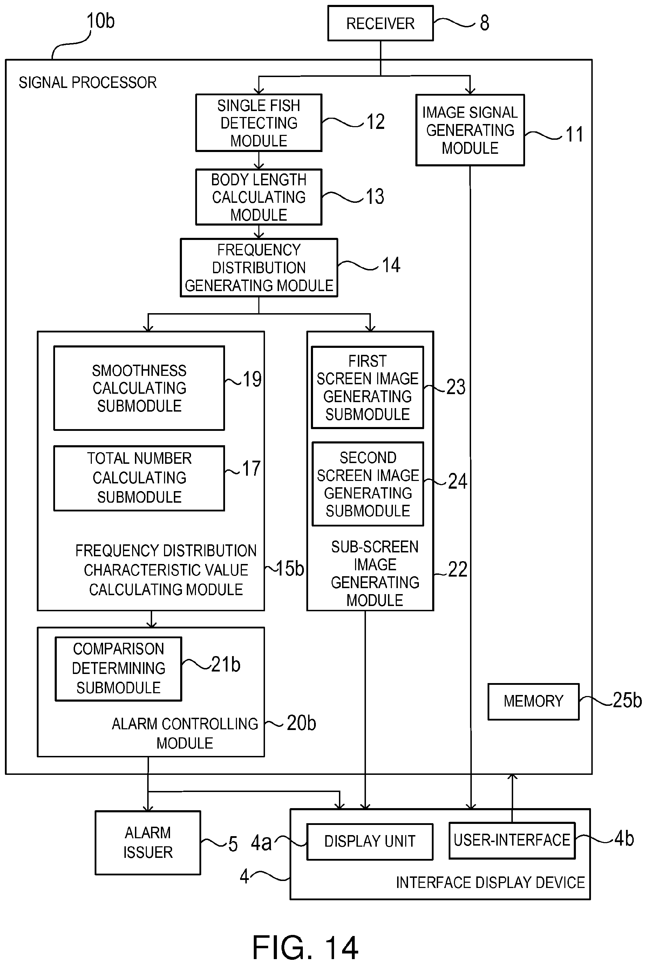

(2) Fig. 14 is a block diagram illustrating specifically a configuration of a signal processor 10b of a fish finder according to another modification. The fish finder of this modification is different from the fish finder 1 of the embodiment in configurations of the memory, the frequency distribution characteristic value calculating module, and the alarm controlling module. Hereinafter, the part that is different from the fish finder 1 of the embodiment is described while omitting description of other parts.

A memory 25b of this modification stores a fourth threshold in addition to the second threshold (the threshold which is the comparison target of the total single fish number SUM) and the particular category which are described above. The fourth threshold is a comparison target of a smoothness (described later in detail).

A frequency distribution characteristic value calculating module 15b of this modification includes a smoothness calculating submodule 19 and the total number calculating submodule 17. Since the configuration and operation of the total number calculating submodule 17 are the same as those of the embodiment, the description thereof is omitted.

The smoothness calculating submodule 19 calculates the smoothness of the frequency distribution generated by the frequency distribution generating module 14. In this modification, the smoothness is a ratio of the number of single fishes in a category (second particular category) adjacent to a first particular category with respect to the number of single fishes in the first particular category. The smoothness indicates a value closer to one (1) as the number of single fishes in the first particular category and the number of single fishes in a category adjacent thereto become closer. The smoothness indicates a value farther from 1 as the difference between the number of single fishes in the first particular category and the number of single fishes in the category adjacent thereto becomes larger.

An alarm controlling module 20b controls the alarm from the alarm issuer 5 based on comparison results of the frequency distribution characteristic values calculated by the frequency distribution characteristic value calculating module 15b (the smoothness and the total single fish number) with the thresholds (the second and fourth thresholds), respectively. Specifically, the alarm controlling module 20b includes a comparison determining submodule 21b. The comparison determining submodule 21b compares the smoothness with the fourth threshold, and compares the total single fish number with the second threshold. The alarm controlling module 20b outputs the alarm signal to the alarm issuer 5 based on the comparison result between the smoothness and the fourth threshold and the comparison result between the total single fish number and the second threshold.

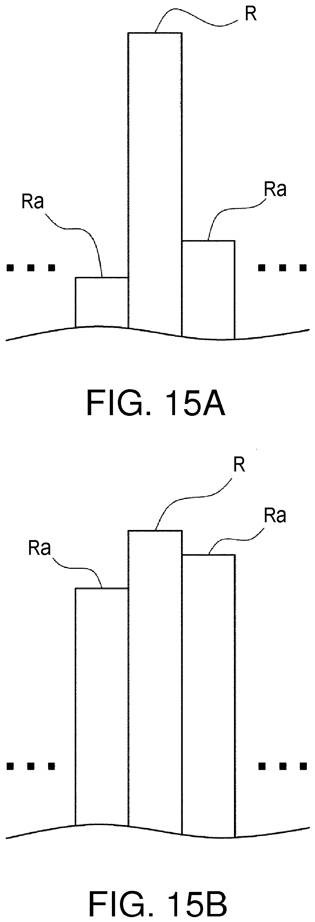

Incidentally, the frequency distribution of the single fishes of the school of fish has different characteristics for every fish kind. Specifically, for example as illustrated in Fig. 15A, there is a fish kind of which a ratio R of single fishes in a given category is significantly higher than ratios Ra of single fishes in adjacent categories thereto. In another example, as illustrated in Fig. 15B, there also is a fish kind of which the ratio R of single fishes in the given category is substantially the same as the ratios Ra of single fishes in the adjacent categories. For example, when the school of fish having the characteristics as illustrated in Fig. 15A is the fishing target, the user may set the fourth threshold to a value close to 0 and the alarm may be issued when the smoothness is the fourth threshold or below. On the other hand, when the school of fish having the characteristics as illustrated in Fig. 15B is the fishing target, the user may set the fourth threshold to a value close to 1 and the alarm may be issued when an absolute value of the smoothness is above the fourth threshold. Thus, it is possible to issue the alarm when the school of fish having a frequency distribution with similar characteristics to the school of fish which is the fishing target of the user is detected (i.e., when a school of fish with high possibility of being the fish kind which is the fishing target of the user is detected).

Note that also in this modification, similar to the embodiment described above, by suitably controlling the user-interface 4b of the interface display device 4, the user may set the respective comparison target parameters (specifically, the second and fourth thresholds). Specifically, the user may set the second and fourth thresholds by selecting desired values from a plurality of given candidate values for the second and fourth thresholds.

As described above, the fish finder of this modification calculates the frequency distribution characteristic values based on the number of single fishes in the first particular category and the number of single fishes in the second particular category, and controls the issuance of the alarm based on the frequency distribution characteristic values. Specifically, the fish finder of this modification controls the issuance of the alarm based on the smoothness (the ratio of the number of single fishes in the second particular category with respect to the number of single fishes in the first particular category). Thus, the issuance of the alarm is controlled by comprehensively taking into consideration ratios of the single fishes in a plurality of categories.

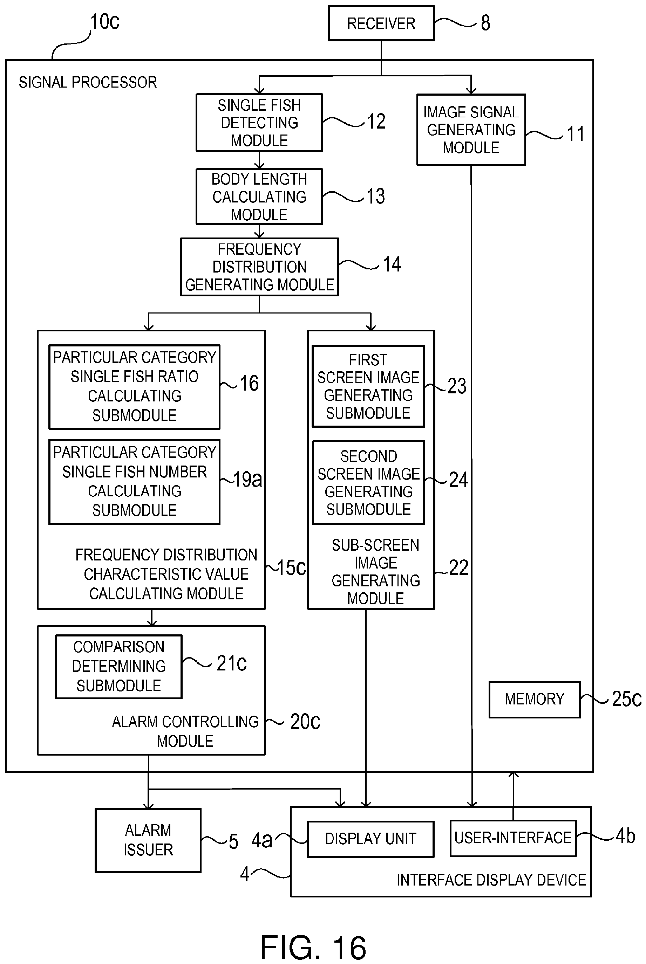

(3) Fig. 16 is a block diagram illustrating specifically a configuration of a signal processor 10c of a fish finder according to another modification. The fish finder of this modification is different from the fish finder 1 of the embodiment in configurations of the memory, the frequency distribution characteristic value calculating module, and the alarm controlling module. Hereinafter, the part that is different from the fish finder 1 of the embodiment is described while omitting description of other parts.

A memory 25c of this modification stores a fifth threshold in addition to the first threshold (the threshold which is the comparison target of the particular category single fish ratio calculated by the particular category single fish ratio calculating submodule 16) and the particular category which are described above. The fifth threshold is a comparison target of the number of single fishes in the particular category (hereinafter, referred to as the particular category single fish number). Note that in this modification, a plurality of particular categories are stored.

A frequency distribution characteristic value calculating module 15c of this modification includes the particular category single fish ratio calculating submodule 16 and a particular category single fish number calculating submodule 19a. Since the configuration and operation of the particular category single fish ratio calculating submodule 16 are the same as those of the embodiment, the description thereof is omitted.

The particular category single fish number calculating submodule 19a calculates the number of single fishes in a particular category stored in the memory 25c, among the categories of the frequency distribution generated by the frequency distribution generating module 14.

An alarm controlling module 20c controls the alarm from the alarm issuer 5 based on comparison results of the frequency distribution characteristic values calculated by the frequency distribution characteristic value calculating module 15c (the particular category single fish ratio and the particular category single fish number) with the thresholds (the first and fifth thresholds), respectively. Specifically, the alarm controlling module 20c includes a comparison determining submodule 21c. The comparison determining submodule 21c compares the particular category single fish ratio with the first threshold stored in the memory 25c, and compares the particular category single fish number with the fifth threshold stored in the memory 25c. If the number of single fishes in one of the particular categories is larger than that in all the other categories, the particular category single fish ratio in the one of the particular categories is the first threshold or above, and the particular category single fish number in the one of the particular categories is the fifth threshold or above, the alarm controlling module 20c outputs an alarm signal to the alarm issuer 5. In other cases, the alarm controlling module 20c does not output the alarm signal to the alarm issuer 5.

Note that also in this modification, similar to the embodiment described above, by suitably controlling the user-interface 4b of the interface display device 4, the user may set the respective comparison target parameters (specifically, the first and fifth thresholds and the particular categories).

(4) With the fish finder 1 of the embodiment, both the alarm sound issued by the alarm issuer 5 and the alarm icon AI displayed on the display unit 4a are used as the alarm for notifying to the user that the school of fish determined as the fishing target of the user is detected; however, one of them may solely be used as the alarm.

(5) With the signal processors 10, 10a and 10b of the fish finders illustrated in Figs. 2, 12 and 14, the examples in which the frequency distribution characteristic value calculating modules 15, 15a and 15b of the signal processors 10, 10a and 10b have the total number calculating module 17 are described; however, the total number calculating module 17 may be omitted. Even with such a configuration, similar to the embodiment, the fish finder configured to determine whether the detected school of fish is the desired school of fish and to suitably notify the determination result to the user, is provided.

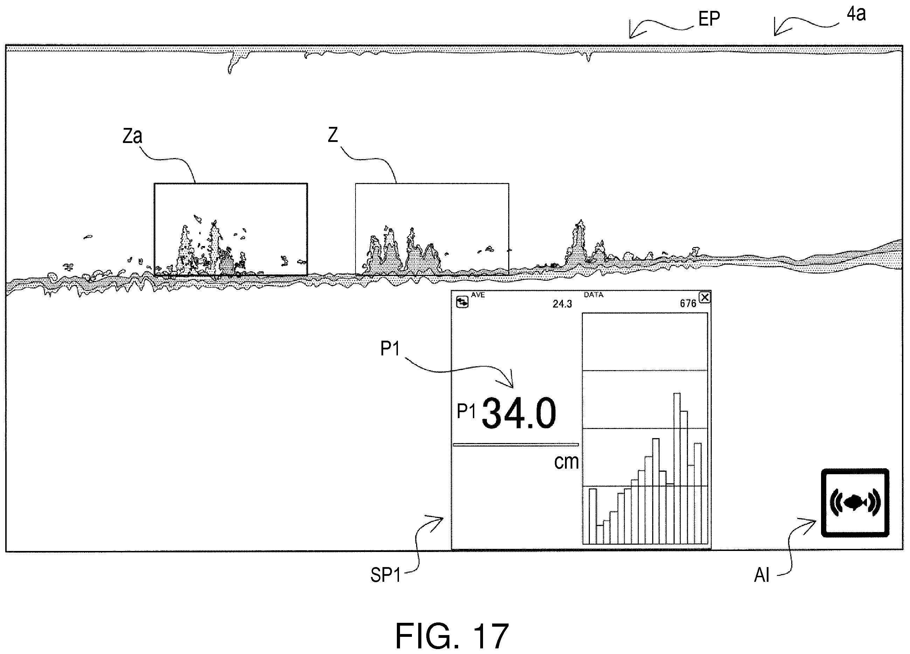

(6) Fig. 17 is a view illustrating a display screen of a display unit 4a of a fish finder according to another modification, after a certain period of time from a timing at which the alarm icon AI is displayed (from the state of the display screen illustrated in Fig. 6). On the display unit 4a of this modification, similar to the embodiment, a relative position of the target zone Z to the display unit 4a does not change over time. However, in this modification, an alarm zone Za having the same shape and size as those of the target zone Z moves over time at the same speed as a scroll speed of the echo screen image EP. A rectangular frame line indicating the alarm zone Za is, for example, assigned with a different color from the rectangular frame line indicating the target zone Z. Thus, even after the certain time period from the issuance of the alarm, the user can understand in which area underwater the school of fish which is the fishing target exists.

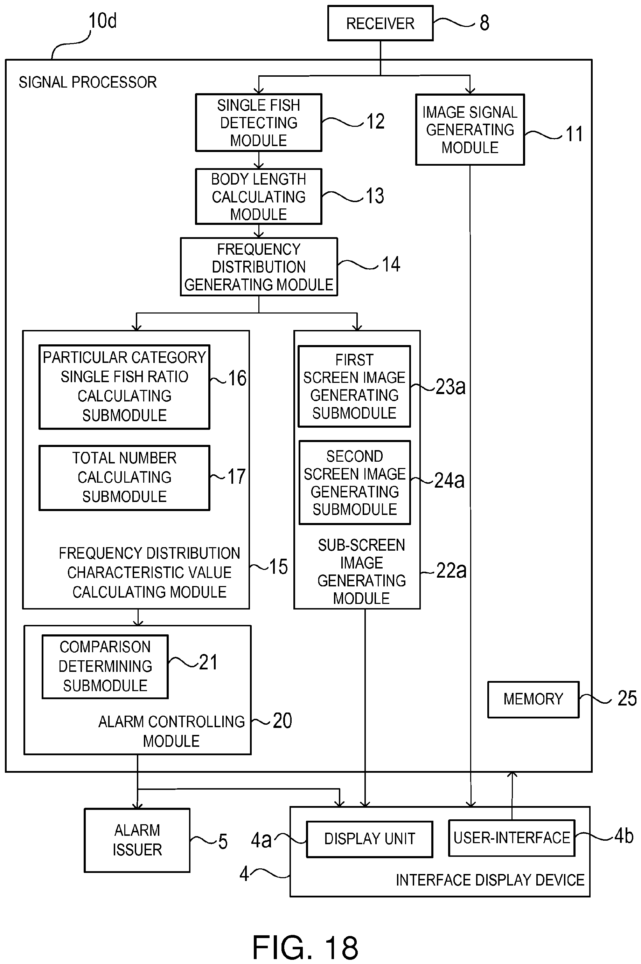

(7) Fig. 18 is a block diagram illustrating specifically a configuration of a signal processor 10d of a fish finder according to another modification. The fish finder of this modification is different from the fish finder 1 of the embodiment in configuration of the sub-screen image generating module. A sub-screen image generating module 22a of this modification includes first and second screen image generating sub modules 23a and 24a of which configurations and operations are different from the embodiment described above. Hereinafter, the part that is different from the fish finder 1 of the embodiment is described while omitting description of other parts.

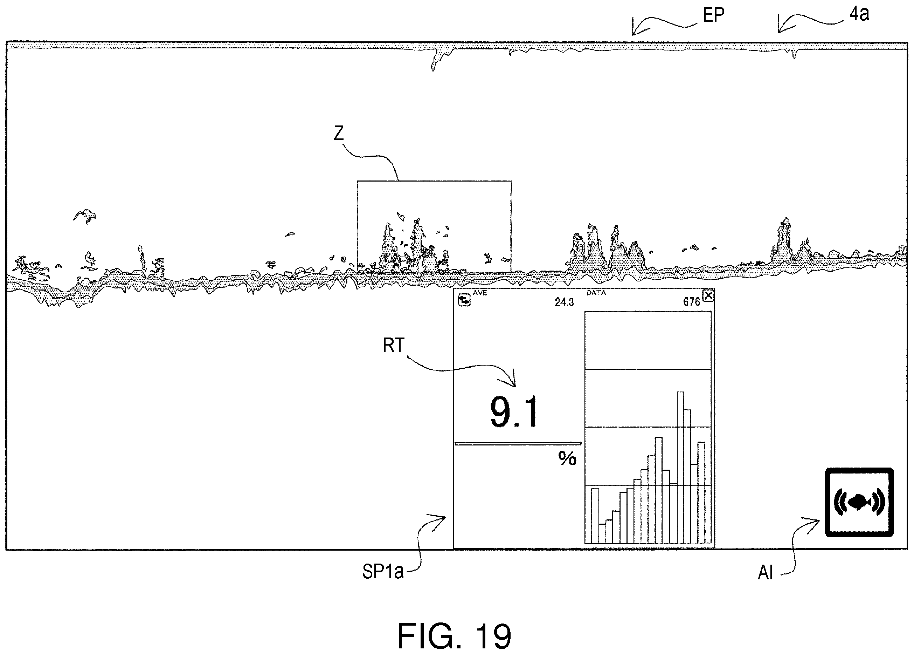

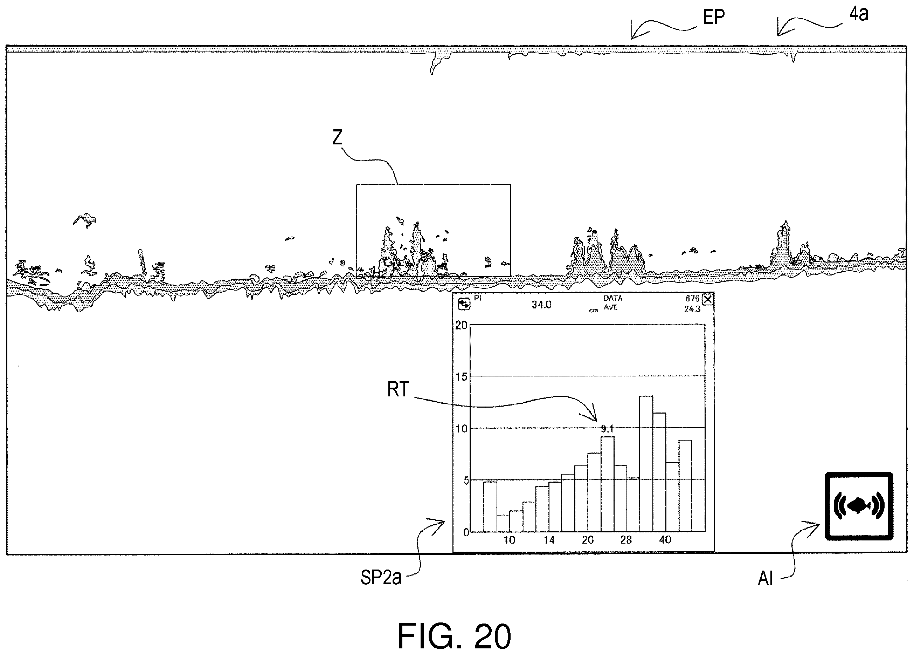

Fig. 19 is a view illustrating an example of a display screen of a display unit 4a of a fish finder according to this modification, in which a first screen image SP1a is displayed as a sub-screen image. Fig. 20 is a view illustrating an example of the display screen of the display unit 4a of the fish finder according to the modification, in which a second screen image SP2a is displayed as the sub-screen image.

The first screen image generating submodule 23a of this modification generates the first screen image SP1a described below.

Similar to the embodiment, the frequency distribution graph G, the total single fish number SUM, and the average value AVE of the fish body lengths are displayed in the first screen image SP1a. In the first screen image SPla, instead of displaying the first peak body length P1, the ratio of the number of single fishes in the particular category with respect to the total number of single fishes in the frequency distribution (hereinafter, referred to as the particular category single fish ratio RT) is displayed.

Further in the first screen image SPla, the particular category single fish ratio RT is displayed by an Arabic numeral in a large size in a left-half area thereof, and the frequency distribution graph G is displayed in a right-half area. Note that the total single fish number SUM and the average value AVE of the single fishes are displayed by an Arabic numeral in a small size in an upper part of the image.

The second screen image generating submodule 24a of this modification generates the second screen image SP2a described below.

Similar to the case of the first screen image SPla, the information relating to single fishes in the frequency distribution, which is obtained based on the frequency distribution generated by the frequency distribution generating module 14, is also displayed in the second screen image SP2a. However, the displayed size of each information is greatly different from the first screen image SP1a. Specifically in the second screen image SP2a, as illustrated in Fig. 20, the frequency distribution graph G is displayed in a large size substantially over the entire second screen image SP2a, and the particular category single fish ratio RT, the total single fish number SUM, and the average value AVE of the single fishes are displayed by an Arabic numeral in a small size.

As described above, with the fish finder of this modification, the particular category single fish ratio RT as the particular single fish index value is displayed in a larger size than the conventional size. Many users aim to catch a particular fish kind, for example, the users constantly measure a ratio of single fishes in a particular category (particular category single fish ratio RT) and catch the fish when the ratio exceeds a certain ratio. Therefore, by displaying the particular category single fish ratio RT in a large size, visual recognizability of the particular category single fish ratio RT improves. Thus, the fish finder with high usability to such users is provided.

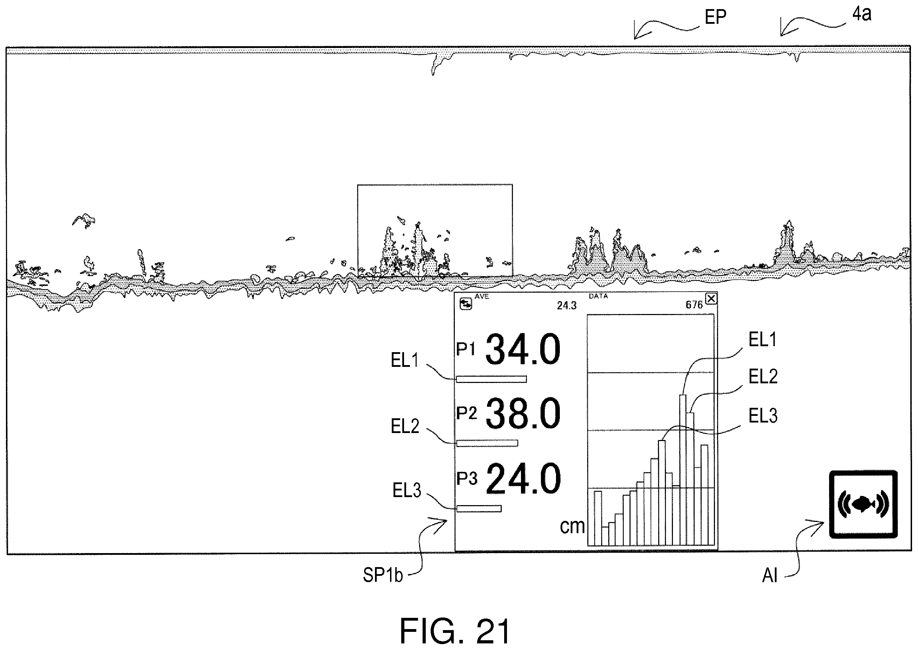

(8) Fig. 21 is a view illustrating a display screen of a display unit 4a of a fish finder according to another modification, in which a first screen image SPlb is displayed as a sub-screen image.

In the first screen image SPlb of the display unit 4a of this modification, in addition to various information displayed in the first screen image SP1 illustrated in Fig. 10, the following information is displayed. Specifically, in the first screen image SPlb, elements (first to third peak elements EL1 to EL3) of the frequency distribution graph G corresponding to the respective peak body lengths P1 to P3 are displayed below the peak body lengths P1 to P3. Thus, it becomes easier for the user to intuitively grasp the ratio of single fishes in a given category based on the lengths of the elements EL1 to EL3 in addition to the numeric values.

Further the peak elements EL1 to EL3 illustrated below the peak body lengths P1 to P3 are assigned with, although not illustrated, the same color tone as the color tones assigned to the elements EL1 to EL3 corresponding to the frequency distribution graph G. Thus, the user can grasp the peak elements EL1 to EL3 displayed in the left part of the first screen image SPlb and the peak elements EL1 to EL3 displayed in the right part of the first screen image SPlb in association with each other, respectively.

(9) In the embodiment described above, the example in which the first and second screen images SP1 and SP2 are displayed to be switchable is described; however, the first screen image SP1 (see Fig. 4) may be displayed only as the sub-screen image. Also in this case, similar to the embodiment described above, the visual recognizability of the particular single fish index value improves. Thus, the fish finder with high usability is provided.

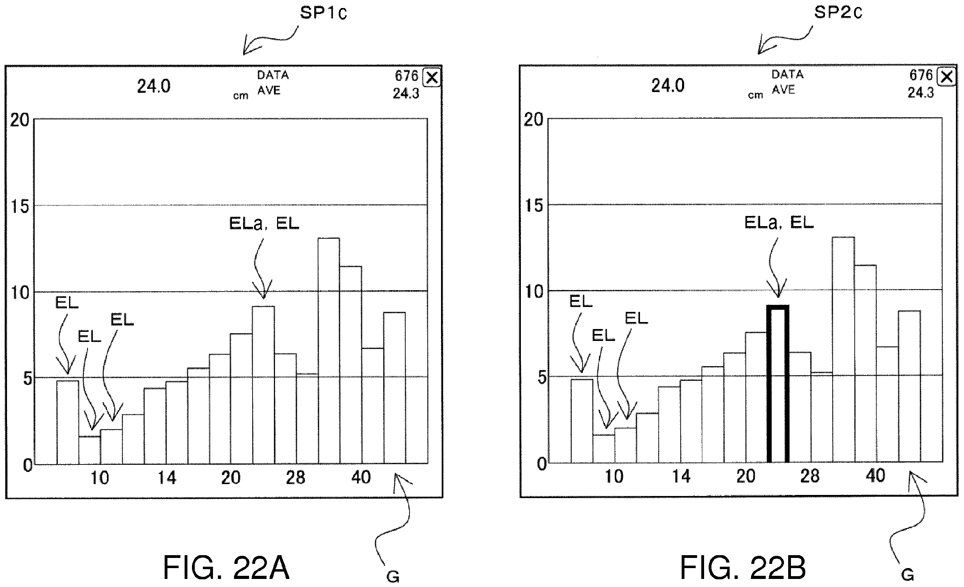

(10) Fig. 22A is a view illustrating a first screen image SPlc displayed on a display screen of a fish finder according to another modification. Fig. 22B is a view illustrating a second screen image SP2c displayed on the display screen of the fish finder according to this modification.

On the display screen of the fish finder according to this modification, in the state where the first screen image SPlc is displayed, when the user selects an arbitrary element EL (in the example of Fig. 22A, element ELa) from a plurality of elements EL of the frequency distribution graph G by clicking it with, for example, a mouse, the first screen image SPlc is switched to the second screen image SP2c where the element ELa is displayed to be emphasized. In the second screen image SP2c (see Fig. 22B), a frame line indicating the element ELa is displayed by a thicker line than that of first screen image SPlc (see Fig. 22A). Thus, the visual recognizability of the desired element EL in the frequency distribution graph improves.

Note that, although the frequency distribution graph is constructed with elements indicated by frame lines in the embodiment and modifications described above, other kinds of forms of graphs may be applied, for example, a line graph or a picture graph.

## Claims

1. An underwater detection device (1), comprising:
a frequency distribution generating module (14) configured to generate a frequency distribution of single fishes by categorizing the single fishes by one of body length and weight, the single fishes being detected based on echo signals corresponding to reflection waves that are caused by transmission waves transmitted underwater;
a frequency distribution characteristic value calculating module (15) configured to calculate a frequency distribution characteristic value indicating a characteristic of the frequency distribution based on a ratio of a single-fish number in a particular category in the frequency distribution, with respect to a total number (SUM) of single fishes in the frequency distribution; and
an alarm controlling module (20) configured to issue an alarm based on a comparison result between the frequency distribution characteristic value and a threshold, wherein the threshold is inputted by a user.

2. The underwater detection device (1) of claim 1, wherein the frequency distribution characteristic value calculating module (15) calculates the frequency distribution characteristic value based on a single-fish number in a first particular category in the frequency distribution and a single-fish number in a second particular category that is other than the first particular category in the frequency distribution.

3. The underwater detection device (1) of claim 1 or 2, wherein the particular category is determined based on an input by a user.

4. The underwater detection device (1) of any of the preceding claims, further comprising a memory (25, 25a, 25b, 25c) configured to store a reference frequency distribution,
wherein the frequency distribution characteristic value calculating module (15) calculates the frequency distribution characteristic value based on a similarity between the frequency distribution and the reference frequency distribution.

5. The underwater detection device (1) of any of the preceding claims, wherein the frequency distribution characteristic value calculating module (15) also calculates a total number (SUM) of single fishes in the frequency distribution as a frequency distribution characteristic value.

6. The underwater detection device (1) of any of the preceding claims, further comprising a display unit (4a) configured to display a particular single fish index value that is an index value of one of body lengths and weights of single fishes in a category that has the largest single-fish number among a plurality of categories in the frequency distribution,
wherein the particular single fish index value displayed on the display unit (4a) is displayed in a larger size than any other character and numeral displayed on the display unit (4a).

7. The underwater detection device (1) of any one of claims 1 to 5, further comprising a display unit (4a) configured to display, as a particular single fish index value, one of a single-fish number in a particular category in the frequency distribution and a ratio of a single-fish number in the particular category in the frequency distribution with respect to a total number (SUM) of single fishes in the frequency distribution,
wherein the particular single fish index value displayed on the display unit (4a) is displayed in a larger size than any other character and numeral displayed on the display unit (4a).

8. The underwater detection device (1) of claim 6 or 7, wherein the display unit (4a) displays the particular single fish index values for the single fishes in a plurality of categories specified by a user.

9. The underwater detection device (1) of any one of claims 6 to 8, wherein the display unit (4a) displays a first screen image (SP1, SPla, SPlb, SP1c) and a second screen image (SP2, SP2a, SP2b, SP2c) to be switchable therebetween, the particular single fish index value being displayed in the first screen image (SP1, SPla, SPlb, SP1c) and the second screen image (SP2, SP2a, SP2b, SP2c), and
wherein the particular single fish index value is displayed in a larger size in the first screen image (SP1, SPla, SPlb, SP1c) than in the second screen image (SP2, SP2a, SP2b, SP2c).

10. The underwater detection device (1) of any one of claims 1 to 5, wherein when an element in a frequency distribution graph (G) generated based on the frequency distribution and displayed on a display unit (4a) is specified by a user, one of a mark, a dot and a line indicating the element is emphasized by being thickened.

11. The underwater detection device (1) of any of the preceding claims, further comprising a transmitting and receiving device (3) for transmitting the transmission waves and receiving the echo signals.

12. An underwater detection method, comprising:
generating a frequency distribution of single fishes by categorizing the single fishes by one of body length and weight, the single fishes being detected based on echo signals corresponding to reflection waves that are caused by transmission waves transmitted underwater;
calculating a frequency distribution characteristic value indicating a characteristic of the frequency distribution based on a ratio of a single-fish number in a particular category in the frequency distribution, with respect to a total number (SUM) of single fishes in the frequency distribution; and
issuing an alarm based on a comparison result between the frequency distribution characteristic value and a threshold, wherein the threshold is inputted by a user.

## Patentansprüche

1. Unterwasserdetektionsvorrichtung (1), die Folgendes umfasst:
ein Häufigkeitsverteilungserzeugungsmodul (14), konfiguriert zum Erzeugen einer Häufigkeitsverteilung einzelner Fische durch Kategorisieren der einzelnen Fische nach Körperlänge oder Körpergewicht, wobei die einzelnen Fische auf der Basis von Echosignalen detektiert werden, die Reflexionswellen entsprechen, die durch unter Wasser übertragene Übertragungswellen verursacht werden;
ein Häufigkeitsverteilungskennwert-Berechnungsmodul (15), konfiguriert zum Berechnen eines Häufigkeitsverteilungskennwertes, der einen Kennwert der Häufigkeitsverteilung auf der Basis eines Verhältnisses einer Anzahl von einzelnen Fischen in einer bestimmten Kategorie in der Häufigkeitsverteilung in Bezug auf eine Gesamtzahl (SUM) von einzelnen Fischen in der Häufigkeitsverteilung anzeigt; und
ein Alarmsteuermodul (20), konfiguriert zum Ausgeben eines Alarms auf der Basis eines Vergleichsergebnisses zwischen dem Häufigkeitsverteilungskennwert und einem Schwellenwert, wobei der Schwellenwert von einem Benutzer eingegeben wird.

2. Unterwasserdetektionsvorrichtung (1) nach Anspruch 1, wobei das Häufigkeitsverteilungskennwert-Berechnungsmodul (15) den Häufigkeitsverteilungskennwert auf der Basis einer Anzahl von einzelnen Fischen in einer ersten bestimmten Kategorie in der Häufigkeitsverteilung und einer Anzahl von einzelnen Fischen in einer zweiten bestimmten Kategorie berechnet, die nicht die erste bestimmte Kategorie in der Häufigkeitsverteilung ist.

3. Unterwasserdetektionsvorrichtung (1) nach Anspruch 1 oder 2, wobei die bestimmte Kategorie auf der Basis einer Eingabe durch einen Benutzer bestimmt wird.

4. Unterwasserdetektionsvorrichtung (1) nach einem der vorherigen Ansprüche, die ferner einen Speicher (25, 25a, 25b, 25c) umfasst, der zum Speichern einer Referenzhäufigkeitsverteilung konfiguriert ist,
wobei das Häufigkeitsverteilungskennwert-Berechnungsmodul (15) den Häufigkeitsverteilungskennwert auf der Basis einer Ähnlichkeit zwischen der Häufigkeitsverteilung und der Referenzhäufigkeitsverteilung berechnet.

5. Unterwasserdetektionsvorrichtung (1) nach einem der vorherigen Ansprüche, wobei das Häufigkeitsverteilungskennwert-Berechnungsmodul (15) auch eine Gesamtzahl (SUM) von einzelnen Fischen in der Häufigkeitsverteilung als Häufigkeitsverteilungskennwert berechnet.

6. Unterwasserdetektionsvorrichtung (1) nach einem der vorherigen Ansprüche, die ferner eine Anzeigeeinheit (4a) umfasst, konfiguriert zum Anzeigen eines bestimmten Einzelfischindexwertes, der ein Indexwert von Körperlängen oder Körpergewichten von einzelnen Fischen in einer Kategorie ist, die die größte Anzahl von einzelnen Fischen unter mehreren Kategorien in der Häufigkeitsverteilung aufweist,
wobei der auf der Anzeigeeinheit (4a) angezeigte bestimmte Einzelfischindexwert größer angezeigt wird als jede(s) andere auf der Anzeigeeinheit (4a) angezeigte Zeichen und Zahl.

7. Unterwasserdetektionsvorrichtung (1) nach einem der Ansprüche 1 bis 5, die ferner eine Anzeigeeinheit (4a) umfasst, die zum Anzeigen, als einen bestimmten Einzelfischindexwert, einer Anzahl von einzelnen Fischen in einer bestimmten Kategorie in der Häufigkeitsverteilung oder eines Verhältnisses einer Anzahl von einzelnen Fischen in der bestimmten Kategorie in der Häufigkeitsverteilung in Bezug auf eine Gesamtzahl (SUM) von einzelnen Fischen in der Häufigkeitsverteilung konfiguriert ist,
wobei der auf der Anzeigeeinheit (4a) angezeigte bestimmte Einzelfischindexwert größer angezeigt wird als jede(s) andere auf der Anzeigeeinheit (4a) angezeigte Zeichen und Zahl.

8. Unterwasserdetektionsvorrichtung (1) nach Anspruch 6 oder 7, wobei die Anzeigeeinheit (4a) die bestimmten Einzelfischindexwerte für die einzelnen Fische in mehreren durch einen Benutzer spezifizierten Kategorien anzeigt.

9. Unterwasserdetektionsvorrichtung (1) nach einem der Ansprüche 6 bis 8, wobei die Anzeigeeinheit (4a) ein erstes Bildschirmbild (SP1, SPla, SPlb, SP1c) und ein zweites Bildschirmbild (SP2, SP2a, SP2b, SP2c) untereinander umschaltbar anzeigt, wobei der bestimmte einzelne Fischindexwert im ersten Bildschirmbild (SP1, SPla, SPlb, SP1c) und im zweiten Bildschirmbild (SP2, SP2a, SP2b, SP2c) angezeigt wird, und
wobei der bestimmte Einzelfischindexwert im ersten Bildschirmbild (SP1, SPla, SPlb, SP1c) größer angezeigt wird als im zweiten Bildschirmbild (SP2, SP2a, SP2b, SP2c).

10. Unterwasserdetektionsvorrichtung (I) nach einem der Ansprüche 1 bis 5, wobei, wenn ein Element in einem Häufigkeitsverteilungsdiagramm (G), das auf der Basis der Häufigkeitsverteilung erzeugt und auf einer Anzeigeeinheit (4a) angezeigt wird, von einem Benutzer spezifiziert wird, ein(e) das Element anzeigende(r) Markierung, Punkt oder Linie durch Verdickung hervorgehoben wird.

11. Unterwasserdetektionsvorrichtung (I) nach einem der vorherigen Ansprüche, die ferner ein Sende- und Empfangsgerät (3) zum Übertragen der Übertragungswellen und Empfangen der Echosignale umfasst.

12. Unterwasserdetektionsverfahren, das Folgendes beinhaltet:
Erzeugen einer Häufigkeitsverteilung einzelner Fische durch Kategorisieren der einzelnen Fische nach Körperlänge oder Körpergewicht, wobei die einzelnen Fische auf der Basis von Echosignalen detektiert werden, die Reflexionswellen entsprechen, die durch unter Wasser übertragene Übertragungswellen verursacht werden;
Berechnen eines Häufigkeitsverteilungskennwertes, der einen Kennwert der Häufigkeitsverteilung auf der Basis eines Verhältnisses einer Anzahl von einzelnen Fischen in einer bestimmten Kategorie in der Häufigkeitsverteilung in Bezug auf eine Gesamtzahl (SUM) von einzelnen Fischen in der Häufigkeitsverteilung anzeigt; und
Ausgeben eines Alarms auf der Basis eines Vergleichsergebnisses zwischen dem Häufigkeitsverteilungskennwert und einem Schwellenwert, wobei der Schwellenwert von einem Benutzer eingegeben wird.

## Revendications

1. Dispositif de détection sous-marine (1), comprenant :
un module de génération de distribution de fréquences (14) configuré pour générer une distribution de fréquences de poissons individuels en catégorisant les poissons individuels par longueur corporelle ou poids corporel, les poissons individuels étant détectés sur la base de signaux d'écho correspondant à des ondes de réflexion qui sont causées par des ondes d'émission émises sous l'eau ;
un module de calcul de valeur caractéristique de distribution de fréquences (15) configuré pour calculer une valeur caractéristique de distribution de fréquences indiquant une caractéristique de la distribution de fréquences sur la base d'un rapport entre un nombre de poissons individuels dans une catégorie particulière dans la distribution de fréquences et un nombre total (SUM) de poissons individuels dans la distribution de fréquences ; et
un module de commande d'alarme (20) configuré pour émettre une alarme sur la base d'un résultat de comparaison entre la valeur caractéristique de distribution de fréquences et un seuil, le seuil étant entré par un utilisateur.

2. Dispositif de détection sous-marine (1) selon la revendication 1, dans lequel le module de calcul de valeur caractéristique de distribution de fréquences (15) calcule la valeur caractéristique de distribution de fréquences sur la base d'un nombre de poissons individuels dans une première catégorie particulière dans la distribution de fréquences et d'un nombre de poissons individuels dans une seconde catégorie particulière qui est différente de la première catégorie particulière dans la distribution de fréquences.

3. Dispositif de détection sous-marine (1) selon la revendication 1 ou 2, dans lequel la catégorie particulière est déterminée sur la base d'une entrée par un utilisateur.

4. Dispositif de détection sous-marine (1) selon l'une quelconque des revendications précédentes, comprenant en outre une mémoire (25, 25a, 25b, 25c) configurée pour stocker une distribution de fréquences de référence,
le module de calcul de valeur caractéristique de distribution de fréquences (15) calculant la valeur caractéristique de distribution de fréquences sur la base d'une similarité entre la distribution de fréquences et la distribution de fréquences de référence.

5. Dispositif de détection sous-marine (1) selon l'une quelconque des revendications précédentes, dans lequel le module de calcul de valeur caractéristique de distribution de fréquences (15) calcule également un nombre total (SUM) de poissons individuels dans la distribution de fréquences en tant que valeur caractéristique de distribution de fréquences.

6. Dispositif de détection sous-marine (1) selon l'une quelconque des revendications précédentes, comprenant en outre une unité d'affichage (4a) configurée pour afficher une valeur particulière d'indice de poisson individuel qui est une valeur d'indice des longueurs corporelles ou des poids corporels de poissons individuels dans une catégorie qui comporte le plus grand nombre de poissons individuels parmi une pluralité de catégories dans la distribution de fréquences,
la valeur particulière d'indice de poisson individuel affichée sur l'unité d'affichage (4a) étant affichée dans une taille supérieure à celle de tous les autres caractères et chiffres affichés sur l'unité d'affichage (4a).

7. Dispositif de détection sous-marine (1) selon l'une quelconque des revendications 1 à 5, comprenant en outre une unité d'affichage (4a) configurée pour afficher, en tant que valeur particulière d'indice de poisson individuel, un nombre de poissons individuels dans une catégorie particulière dans la distribution de fréquences ou un rapport entre un nombre de poissons individuels dans la catégorie particulière dans la distribution de fréquences et un nombre total (SUM) de poissons individuels dans la distribution de fréquences,
la valeur particulière d'indice de poisson individuel affichée sur l'unité d'affichage (4a) étant affichée dans une taille supérieure à celle de tous les autres caractères et chiffres affichés sur l'unité d'affichage (4a).

8. Dispositif de détection sous-marine (1) selon la revendication 6 ou 7, dans lequel l'unité d'affichage (4a) affiche les valeurs particulières d'indice de poisson individuel pour les poissons individuels dans une pluralité de catégories spécifiées par un utilisateur.

9. Dispositif de détection sous-marine (1) selon l'une quelconque des revendications 6 à 8, dans lequel l'unité d'affichage (4a) affiche une première image d'écran (SP1, SPla, SPlb, SP1c) et une seconde image d'écran (SP2, SP2a, SP2b, SP2c) qui sont interchangeables, la valeur particulière d'indice de poisson individuel étant affichée sur la première image d'écran (SP1, SPla, SPlb, SP1c) et sur la seconde image d'écran (SP2, SP2a, SP2b, SP2c), et
la valeur particulière d'indice de poisson individuel étant affichée dans une taille supérieure sur la première image d'écran (SP1, SPla, SPlb, SP1c) à celle sur la seconde image d'écran (SP2, SP2a, SP2b, SP2c).

10. Dispositif de détection sous-marine (1) selon l'une quelconque des revendications 1 à 5, dans lequel, lorsqu'un élément sur un graphique de distribution de fréquences (G) généré sur la base de la distribution de fréquences et affiché sur une unité d'affichage (4a) est spécifié par un utilisateur, une marque ou un point ou une ligne indiquant l'élément est mis en évidence par un épaississement.

11. Dispositif de détection sous-marine (1) selon l'une quelconque des revendications précédentes, comprenant en outre un dispositif d'émission et de réception (3) pour émettre les ondes d'émission et recevoir les signaux d'écho.

12. Procédé de détection sous-marine, comprenant les étapes consistant à :
générer une distribution de fréquences de poissons individuels en catégorisant les poissons individuels par longueur corporelle ou poids corporel, les poissons individuels étant détectés sur la base de signaux d'écho correspondant à des ondes de réflexion qui sont causées par des ondes d'émission émises sous l'eau ;
calculer une valeur caractéristique de distribution de fréquences indiquant une caractéristique de la distribution de fréquences sur la base d'un rapport entre un nombre de poissons individuels dans une catégorie particulière dans la distribution de fréquences et un nombre total (SUM) de poissons individuels dans la distribution de fréquences ; et
émettre une alarme sur la base d'un résultat de comparaison entre la valeur caractéristique de distribution de fréquences et un seuil, le seuil étant entré par un utilisateur.
